# EUROPÄISCHE PATENTSCHRIFT

(11) **EP 2 744 638 B1**
(45) Veröffentlichungstag und Bekanntmachung des Hinweises auf die Patenterteilung: **27.04.2016**
(21) Anmeldenummer: 12735892.7
(22) Anmeldetag: 19.07.2012
(51) Int. Cl.: B29C 51/08, B29C 51/02, B29K 33/04

(54) **BIAXIALE UMFORMUNG DICKWANDIGER ACRYLGLASPLATTEN**
BIAXIAL REFORMING OF THICK-WALL ACRYLIC GLASS BOARDS
DEFORMATION BIAXIALE DE PLAQUES EN VERRE ACRYLIQUE A PAROI EPAISSE

(30) Priorität: 17.08.2011 EP 11006719; 30.11.2011 DE 102011087446
(43) Veröffentlichungstag der Anmeldung: 25.06.2014
(73) Patentinhaber: Evonik Röhm GmbH, 64293 Darmstadt (DE)
(72) Erfinder: STUBER, Wolfgang, 55288 Udenheim (DE); ECKHARDT, Christian, 64295 Darmstadt (DE); HILSMANN, Helmut, 37270 Vérétz (FR)
(86) Internationale Anmeldenummer: PCT/EP2012/064136
(87) Internationale Veröffentlichungsnummer: WO 2013/023867

(56) Entgegenhaltungen:
- DE-A1- 10 359 563
- DE-C- 469 929
- FR-A- 1 253 044
- US-A- 4 348 060
- US-A1- 2008 149 016
- US-B1- 6 221 300

## Beschreibung

Die vorliegende Erfindung betrifft ein neues Verfahren zur biaxialen Umformung von Rohling aus einem Polymermaterial, sowie neuartige, dickwandige, biaxial umgeformte Bauteile und deren Verwendung.

Dickwandige Bauteile aus Acrylglas in der Form von z. B. Kugelsegmentfenstern, Halbkugelfenstern werden derzeit hauptsächlich als Verglasung von Forschungs- und touristischen Tauchbooten eingesetzt. Hierbei erfordert die Geometrie der Scheiben eine konstante Wanddicke und ein optisch einwandfreies Material, welches zudem den hohen Materialansprüchen der entsprechenden Regelwerke genügen muss. Bauteilrohlinge dieser Güte werden maßgeblich durch Druckpolymerisation hergestellt. Durch Fräsen, Schleifen und Polieren werden dann daraus die finalen Fensterelemente produziert. Dieses Verfahren hat die Problematik, dass bei der Herstellung des Rohlings eingetragener Dreck, Schrumpfblasen und Blasen in den fertigen Bauteilen erst nach Fertigstellung der Fenster erkannt werden können. Sie sind jedoch ein "knock out" Kriterium für die Abnahme und den Einsatz, so dass es zu hohen Ausstoßmengen, langen Lieferzeiten bzw. Lieferunsicherheiten und Doppelarbeiten kommt.

Umformungsverfahren sind im Stand der Technik ebenfalls bekannt. Dabei handelt es sich im Wesentlichen um biaxiale Reckverfahren, welche sich dadurch auszeichnen, dass ein Acrylglasblock an den Seiten eingespannt und derart gereckt wird, dass im Scheitel nur noch eine Dicke von etwa 30% der ursprünglichen Materialdicke erhalten bleibt. Mit diesem Verfahren werden z. B. Lichtkuppel hergestellt. Diese biaxialen Reckverfahren sind deshalb für die erfindungsgemäßen Produkte unbrauchbar, da für ein 100 mm dickes Endprodukt ein mindestens 300 mm dicker Rohling gefertigt werden müsste, was zu teuer und zeitaufwendig wäre. Für Bauteildicken von 30 mm und mehr scheiden diese Verfahren daher aus.

Es besteht somit ein großer Bedarf an effizienten Verfahren zur Herstellung von biaxial gekrümmten Bauteilen mit hohen Wanddicken, die hohen sichercheitstechnischen sowie optischen Anforderungen genügen.

Aufgabe der vorliegenden Erfindung war es daher ein Verfahren bereitzustellen, welches die Nachteile der Verfahren des Standes der Technik nicht oder nur in verringertem Maße aufweist. Ferner sollen biaxial gekrümmte Bauteile mit hohen Wanddicken bereitgestellt werden, welche hohen sicherheitstechnischen und optischen Anforderungen genügen und ökonomischer hergestellt werden können als Produkte des Standes der Technik.

Eine spezielle Aufgabe bestand darin ein Verfahren bereitzustellen, welches zu weniger Ausschuss führt und somit ökonomischer durchführbar ist. Insbesondere soll die optische Güte des umgeformten Bauteils schon zu einem möglichst frühen Zeitpunkt des Herstellungsprozesses erkenn- und steuerbar sein.

In einer weiteren speziellen Aufgabe soll das erfindungsgemäße Verfahren zu möglichst guten Festigkeitseigenschaften im Endprodukt führen und die Herstellung von Produkten mit möglichst gleichmäßigen Wandstärken ermöglichen.

Eine spezielle Aufgabe bestand darin, ein Verfahren zu entwickeln, in dem das Verhältnis aus Dicke des Rohlings zu Dicke des umgeformten Bauteils möglichst klein ist.

Weitere nicht explizit genannte Aufgaben ergeben sich aus dem Gesamtzusammenhang der nachfolgenden Beschreibung, Beispiele, Ansprüche und Abbildungen.

Die Erfinder haben überraschend gefunden, dass es möglich ist mittels eines biaxialen Umformungsverfahren gemäß Anspruch 1 bzw. eines der davon abhängigen Ansprüche, dickwandige Bauteile wie z. B. Kugelsegmentfenster und Hohlformen, herzustellen, die sehr hohen sicherheitstechnischen und optischen Anforderungen genügen. Das erfindungsgemäße Verfahren stellt einen wesentlichen technischen Fortschritt gegenüber den oben beschriebenen Umformungsverfahren des Standes der Technik dar, da nur eine sehr geringe Reckung erfolgt und somit die mechanischen Eigenschaften des Rohlings weitgehend erhalten bleiben.

Gegenüber den oben erwähnten Druckpolymerisationsverfahren weist das erfindungsgemäße Verfahren den Vorteil auf, dass es von geprüften Rohlingen ausgeht, d.h. dass die optische und mechanische Qualität des Endbauteils bereits vor der Umformung sichergestellt und Einschlüsse wie Dreck und Blasen bereits zu diesem Zeitpunkt ausgeschlossen werden können. Verunreinigungen durch das Formwerkzeug sind unerheblich, da diese lediglich an der Oberfläche des umgeformten Bauteils anhaften und durch Schleifen und Polieren leicht entfernt werden können. Mit dem erfindungsgemäßen Verfahren kann bereits zu einem sehr frühen Zeitpunkt eine Qualitätskontrolle erfolgen und somit der Ausschuss minimiert und die Lieferzeit sowie die Liefersicherheit deutlich verbessert werden.

Durch die gleiche bzw. nur geringfügig dickere Wandstärke des Rohlings im Vergleich zum umgeformten Bauteil kann zudem materialsparend gearbeitet und die Rohstoffkosten gesenkt werden.

Durch die apparative Ausgestaltung der Apparatur ist diese flexibel einsetzbar und es können sowohl symmetrische als auch asymmetrische Bauteile hergestellt werden. Die Dicke und Form der Bauteile können schnell und einfach variiert werden.

Gegenstand der vorliegenden Erfindung sind daher ein Verfahren nach Anspruch 1, dickwandige nicht planare Bauteile nach Anspruch 8 sowie deren Verwendung. Bevorzugte Ausgestaltungsformen werden in den abhängigen Ansprüchen unter Schutz gestellt.

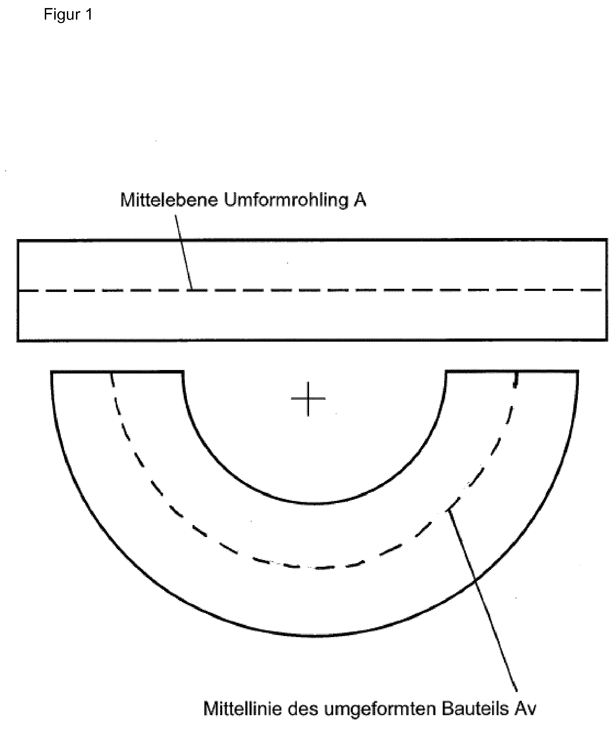

Das erfindungsgemäße Verfahren zur Herstellung biaxial gekrümmter Bauteile aus Polymethylmethacrylat-haltigen Rohlingen zeichnet sich dadurch aus, dass es die nachfolgenden Schritte umfasst:
a) Erzeugung eines Rohlings mit einer Dicke von 30 bis 400 mm aus einem Polymethylmethacrylat-haltigen Polymermaterial, wobei die Fläche A in der Mittelebene des Rohlings der Fläche Av in der Mittelebene des umgeformten Bauteils - zur Definition von "A" und "Av" siehe Figur 1 - mit einer Varianz von ± 40 % entspricht,
b) Einführung des Rohlings in die Umformungsapparatur derart, dass er auch während der Umformung an seinen Rändern frei beweglich ist
c) Erwärmen des Rohlings auf eine Temperatur von 120 bis 170°C
d) Umformen des Rohlings mittels einer Stempelumformung.

In Schritt a) wird ein Rohling aus einem Polymethylmethacrylat-haltigen Polymermaterial erzeugt. Hierzu können alle dem Fachmann bekannten Verfahren verwendet werden. Bevorzugt wird der Rohling jedoch im Gussverfahren oder Continous Cast Verfahren hergestellt. In aller Regel wird ein plattenförmiger Rohling verwendet.

In einer bevorzugten Ausführungsform besteht der Rohling aus einem einschichtigen Block. Diese Ausführungsform wird man bevorzugt dann wählen, wenn an das umgeformte Bauteil sehr hohe mechanische Anforderungen gestellt werden.

In einer alternativen, bevorzugten Ausführungsform der vorliegenden Erfindung ist es auch möglich Rohlinge, die aus mehreren miteinander verbundenen Schichten bestehen, zu verwenden. Diese werden bevorzugt durch Laminieren oder Coextrudieren erzeugt. Diese Ausführungsform wird eher dann gewählt werden, wenn an das umgeformte Bauteil geringere mechanische Anforderungen gestellt werden. Diese Ausführungsform birgt jedoch den Vorteil, dass spezielle Effekte und mechanische Eigenschaften erzielt werden können. So könnte z. B. als Rohling ein Block aus zwei unterschiedlich eingefärbten Schichten verwendet werden, wodurch spezielle optische Effekte im finalen Bauteil erziehlt werden können. Die Dicke der jeweiligen Schichten im Laminat bzw. Coextrudat ist dabei frei wählbar.

Für das erfindungsgemäße Verfahren ist es wichtig, dass die Fläche A in der Mittelebene des Rohlings der Fläche Av in der Mittelebene des umgeformten Bauteils mit einer Varianz von ± 40 %, bevorzugt ± 30 % und besonders bevorzugt ± 20% entspricht. Mit anderen Worten, die Fläche A des Rohlings sollte möglichst weitestgehend der Fläche des Av des umgeformten Materials entsprechen. Die Form des Rohlings sollte an die spätere Form des umgeformten Bauteils angepasst sein. Besonders bevorzugt weicht der Abstand eines jeden Randpunkts der Mittelebene A vom Mittelpunkt von A im Vergleich zum Abstand des jeweils gleichen Randpunktes der Mittelebene Av vom Mittelpunkt von Av um maximal ± 40 %, bevorzugt ± 30 % und besonders bevorzugt ± 20% ab. Mit anderen Worten bedeutet dies, dass z. B. bei der Herstellung eines halbkugelförmigen Bauteils eine möglichst runde Rohlingscheibe verwendet wird. Die geometrischen Vorgaben des Rohlings sind wichtig um die aufzubringende Umformarbeit und Umformkräfte gering zu halten. Mit der bestmöglichen Anpassung der Form des Rohlings, werden die Reckungen und Stauchungen im umgeformten Teil minimiert, was einer besonders materialschonende sowie material- und energiesparenden Umformung entspricht.

Ein besonderer Vorteil des erfindungsgemäßen Verfahrens liegt darin, dass es nur zu geringen Ausreckungen kommt und somit vergleichweise dünne Rohlinge eingesetzt werden können. In bevorzugten Ausführungsformen werden daher Rohlinge eingesetzt, deren Dicke an ihrer dünnsten Stelle im Verhältnis von 1,0 bis 2,0, besonders bevorzugt 1,05 bis 1,5, und ganz besonders bevorzugt 1,1 bis 1,2, zur Dicke der umgeformten Bauteile an deren dünnster Stelle liegt.

Das erfindungsgemäße Verfahren wird mit Rohlingen einer Dicke von 30 bis 400 mm, bevorzugt 30 bis 300 mm, besonders bevorzugt 30 bis 250 mm, ganz besonders bevorzugt 50 bis 200 mm, speziell bevorzugt 50 bis 180 mm und insbesondere bevorzugt 60 bis 160 mm durchgeführt, so dass umgeformte Bauteile mit einer breit variierbaren Dicke hergestellt werden können.

Das eingesetzte Polymermaterial muss den mechanischen und optischen Anforderungen des finalen Bauteils entsprechen. Insbesondere in kritischen Einsatzgebieten muss es den einschlägigen technischen Regelwerken entsprechen, damit auch die fertige Scheibe diesen Anforderungen genügt. Eines dieser Standardwerke ist die ASME PVHO (American Standard of Mechanical Engineering) in ihrer jeweils aktuellen Form. Hier werden detailliert die Mindestanforderungen der Materialeigenschaften beschrieben, welche bereits das Ausgangsmaterial aufweisen muss. Darüber hinaus sind die Forderungen bezüglich der optischen Reinheit (keine Blasen, Verzerrungen, Dreckeinschlüsse,...) zu erfüllen. Die vorgenannten Bedingungen werden insbesondere von Polymethylmethacrylat-haltigen Polymermaterialien erfüllt, beispielhaft sei PLEXIGLAS®GS der Type 0Z00 der Firma Evonik Röhm GmbH genannt, was durch ein Zertifikat des Germanischen Lloyd bestätigt wird.

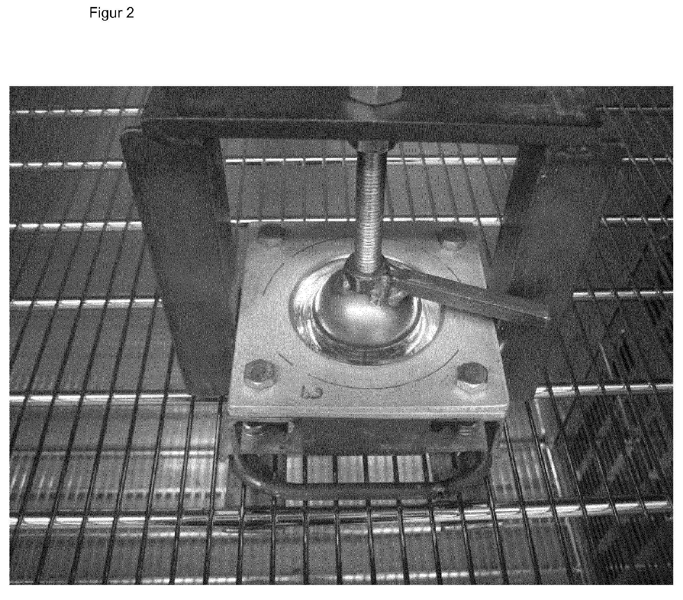

Ein weiteres wesentliches Element der vorliegenden Erfindung ist, dass der Rohling in Schritt b) derart in die Umformungsapparatur eingeführt wird, dass er während der Umformung an seinen Rändern frei beweglich ist. Mit anderen Worten, der Rohling ist am Rand weder fest eingespannt noch eingeklemmt oder in ähnlicher Art fixiert. Bevorzugt liegt der Rohling in der Umformungsapparatur auf einer Ziehmatrize auf. Die Erfinder haben herausgefunden, dass auf diese Weise die Platte (der Rohling) während der Umformung ungehindert nachgleiten bzw. nachfliesen kann und eingetragene Spannungen im Verfahrensfortschritt selbsttätig abgebaut (Relaxation) werden können. Dies ist ein wesentlicher Unterschied zu Umformungsverfahren des Standes der Technik. In Figur 2 ist eine erfindungsgemäße Apparatur mit umgeformtem Rohling abgebildet. Der markierte, kreisförmige Rand auf der Ziehmatrize entspricht dem ursprünglichen Umfang des Rohlings. In Figur 2 wurde ein halbkugelförmiges Bauteil hergestellt und dazu ein kreisrunder Rohling verwendet. Figur 2 zeigt, dass der Rohling sich derart bewegt hat, dass sein Rand nach der Umformung bündig zur Ziehform steht. Bei fixierten Rändern wären diese nach wie vor an der markierten Linie und es wäre zu einer Reckung und daher Schwächung des Materials gekommen.

Wird im erfindungsgemäßen Prozeß ausschließlich der Rohling umgeformt, so bedeutet dies, dass für jede Rohlingdicke bzw. Werkzeuggeometrie eine spezielle Ziehmatrize hergestellt werden muss.

Um dies zu vermeiden umfasst die vorliegende Erfindung in einer speziellen Ausführungsform ein Verfahren, bei dem auf den Rohling, d.h. auf der Seite des Stempels und/oder unter den Rohling, d.h. auf der Seite der Ziehmatrize, eine oder mehrere Verlustscheiben aufgelegt werden. Diese Scheiben sind vorzugsweise nicht fest, d. h. im Sinne eines Laminats, mit dem Rohling verbunden, können allerdings auch partiell oder flächig fest verbunden sein. In dieser Ausführungsform werden der Rohling und alle Verlustscheiben zusammen umgeformt. Alle Verlustscheiben können recycelt werden. Diese Ausführungsform bietet den großen Vorteil, dass mit einer Apparatur, d.h. einer Ziehmatrize, viele verschiedene Geometrien und Bauteildicken abgebildet werden können und nicht jedes mal neue Werkzeuge hergestellt werden müssen. Gerade bei PMMA, welches sehr gut recyclebar ist, führt dies zu einer deutlichen Kostenreduktion. Werden als Verlustscheiben sortenreine Kunststoffe eingesetzt, so werden die Recyclingmöglichkeiten noch verbessert.

Werden die Verlustscheiben auf den Rohling gelegt, so ist deren, dem Rohling zugewandte Fläche bevorzugt um maximal 5% größer oder kleiner als die des Rohlings. Besonders bevorzugt ist die Fläche gleich. Bei runden oder annähernd runden Verlustscheiben ist deren Durchmesser bevorzugt bis zu 5 % größer oder kleiner ist als der des Rohlings. Besonders bevorzugt weisen die Verlustscheiben einen gleichen Durchmesser wie der Rohling auf. Die Form von Rohling und Verlustscheibe ist hier bevorzugt gleich.

Wird eine Verlustscheibe verwendet, die unter den Rohling, gelegt wird, so ist deren, dem Rohling zugewandte Fläche bevorzugt um maximal 5% größer oder kleiner als die des Rohlings. Besonders bevorzugt ist die Fläche gleich. Bei runden oder annähernd runden Verlustscheiben ist deren Durchmesser bevorzugt bis zu 5 % größer oder kleiner ist als der des Rohlings. Besonders bevorzugt weisen die Verlustscheiben einen gleichen Durchmesser wie der Rohling auf. Die Form von Rohling und Verlustscheibe ist hier bevorzugt gleich.

Bei Verlustscheiben, die unter den Rohling gelegt werden, kann die Form allerdings im Bereich des Stempels auch ausgespart sein. Die Aussparung kann in dieser bevorzugten Ausführungsform bis zu 95% der Rohlingsoberfläche betragen. In dem Fall entspricht die dem Rohling zugewandte Fläche der Verlustscheibe bevorzugt der Fläche des Rohlings minus der Fläche der Aussparung der Verlustscheibe mit einer Varianz von maximal 5%. Besonders bevorzugt ist die Fläche der Verlustscheibe gleich der Fläche des Rohlings minus der Fläche der Aussparung.

Es können in dieser Ausführungsform prinzipiell beliebig viele Verlustscheiben verwendet werden. Effektiver weise wird man jedoch nur eine Verlustscheibe auf oder unter dem Rohling verwenden oder wird eine Verlustscheibe auf und eine unter dem Rohling verwenden.

Eine weitere alternative Ausführungsform zur Reduktion der Werkzeugkosten besteht darin flexible Ziehmatrizen und/oder Stempel, d.h. Ziehmatrizen oder Stempel deren Durchmesser und Form verändert werden kann, zu verwenden.

In Schritt c) des erfindungsgemäßen Verfahrens wird der Rohling auf eine Temperatur von 120 bis 170°C, bevorzugt 120 bis 150°C erwärmt. Dies kann im Prinzip auf jede beliebige Art und Weise erfolgen. Beispielweise kann der Rohling in einer externen Apparatur, z. B. einem Trockenschrank, erwärmt und dann in die erfindungsgemäße Apparatur eingeführt werden. In diesem Fall würde Schritt c) vor Schritt b) erfolgen.

Alternativ kann der Rohling jedoch auch in der Umformapparatur selbst erwärmt werden. Dazu kann die Apparatur entweder entsprechende Heizeinrichtungen enthalten oder die ganze Umformapparatur kann mit einer temperierbaren Einhausung, bevorzugt einem Wärmeschrank, umgeben sein.

Während der Umformung, bevorzugt während der gesamten Umformung, wird die Prozeßtemperatur des Rohlings bevorzugt mit einer Varianz von +- 5 %, besonders bevorzugt +- 4 % und ganz besonders bevorzugt +- 2 % der Ausgangstemperatur des Rohlings konstant gehalten. Für die Sicherstellung der Prozesstemperaturen kann die Umformung komplett in einer temperierbaren Einhausung, z. B. einem Wärmeschrank, erfolgen. Weiter ist die Benutzung temperierter Werkzeuge ein geeignetes Vorgehen. Eine unterschiedliche Temperierung der Formen und Kontaktflächen ist ebenfalls möglich um gezielt Umformbedingungen einzustellen.

Besonders bevorzugt ist es, dass der gesamte Rohling möglichst konstant die Umformtemperatur hat, bevor die Umformung gestartet und dass die Temperatur des Rohlings in der Mittelebene während der gesamten Umformung mit einer Varianz von bis zu ± 5 % konstant gehalten wird. Dabei ist bevorzugt, dass die Temperatur des Rohlings in der Mittelebene und an der äußeren Oberfläche bevorzugt um maximal 15 bis 25 °C, besonders bevorzugt um maximal 5 bis 15 °C abweichen sollte. Über die Umformung ist vorzugsweise sicherzustellen, dass möglichst keine Temperaturschwankungen auftreten. Die Prozessbedingungen können z. B. dadurch kontrolliert und geregelt werden, dass entsprechende Messungen der Temperatur an einem Referenzblock gleicher Dicke, der sich in der gleichen oder einer vergleichbaren thermischen Einhausung befindet, durchgeführt werden.

Die Umformung verläuft in der Regel sehr langsam ohne Unterbrechung oder aber in Teilschritten mit kleinen Umformschritten. Haltephasen ermöglichen eine Relaxation des Materials, welches dann nachfliesen kann. So wird die Ausreckung auf ein absolutes Minimum reduziert. Durch den gewählten Temperaturbereich, die Umformgeschwindigkeit oder auch die Haltephasen, können die hiervon abhängigen Kräfte deutlich reduziert werden.

Wird der erfindungsgemäße Prozess ohne Haltephasen durchgeführt, so beträgt die Umformgeschwindigkeit bevorzugt 0,2 bis 2 mm/ sec, besonders bevorzugt 0,5 bis 1,5 mm/sec und ganz besonders bevorzugt 0,5 bis 1 mm/sec. Wird der erfindungsgemäße Prozess hingegen mit einer oder mehreren Haltephasen durchgeführt, so beträgt die Umformgeschwindigkeit bevorzugt 0,2 bis 20 mm/sec, besonders bevorzugt 0,5 bis 10 und ganz besonders bevorzugt 0,5 bis 5 mm/sec . Besonders bevorzugt wird ohne Haltephasen umgeformt.

Der Kraftbedarf für die Umformung steigt mit der Umformgeschwindigkeit. Die eigentliche Umformzeit stellt im Gesamtprozess (Heizen, Umformen und Abkühlen) den weitaus kürzesten Abschnitt dar. Die Umformgeschwindigkeit sollte deshalb sehr moderat gewählt werden.

Die eigentliche Umformung des Rohlings erfolgt im erfindungsgemäßen Verfahren in Schritt d) mittels einer Stempelumformung. Es hat sich dabei als besonders vorteilhaft für die Verfahrensführung und die Produktqualität erwiesen, wenn der Rohling von unten gegen einen fest montierten Stempel gefahren oder ein Stempel von oben in einen Rohling gedrückt wird, so dass sich das umgeformte Bauteil auf der Oberseite der Ziehmatrize ausbilden kann. Als Ziehmatrize kann bevorzugt eine offene oder eine geschlossene Gegenform verwendet werden.

Der Umformungsprozess kann unterstützt und die Kraft auf den Stempel reduziert werden, wenn ein Umformhilfsmittel, z. B. ein Gleitmittel, auf die Ziehmatrize und/oder den Stempel aufgetragen wird und/oder eine Apparatur mit einer Unterdruckeinrichtung, bevorzugt einem Vakuumsack unterhalb der Ziehmatrize, verwendet wird. Dadurch können die im Bereich des Durchgangs durch die Ziehmatrize auftretenden Spannungen bzw. Scherkräfte verringert werden, was sich positiv auf die mechanischen Eigenschaften des umgeformten Bauteils auswirkt.

Die Variabilität des erfindungsgemäßen Verfahrens kann dadurch gesteigert werden, dass eine Apparatur verwendet wird in der die formgebenden Teile, insbesondere Stempel und/oder Ziehmatrize, beweglich ausgestaltet sind, so dass deren Position während der Umformung verändert werden kann. Dadurch können auch asymmetrische Hohlformen, wie z. B. Teile von Wasserrutschen, hergestellt werden.

In der Regel verbleibt das umgeformte Bauteil nach der Umformung in der Form und wird mit dieser abgekühlt und erst dann entnommen. Insbesondere bei Öffnungswinkeln größer 150°C besteht die Gefahr, dass während des Abkühlens das umgeformte Bauteil auf den Stempel aufschrumpft. In solchen Fällen ist der Formstempel bevorzugt vor dem Aufschrumpfen zurückzufahren, um dies zu verhindern. Alternative, ebenfalls bevorzugte Möglichkeiten das Aufschrumpfen zu verhindern sind die Verringerung des Stempelumfangs, d.h. einen größenmäßig flexiblen Stempel zu verwenden, oder die Verwendung einer Gleit- bzw. Trennschicht zwischen Stempel und umzuformendem Bauteil. Ein bevorzugtes Material hierfür wäre z. B. Teflon oder ähnliche Materialien.

Besonders bevorzugt erfolgt das Zurückfahren des Stempels und/oder das Trennen der Werkzeuge bei einer Temperatur kleiner gleich der Vicat Erweichungstemperatur des Polymers. Dadurch kann die Formstabilität des umgeformten Bauteils bestmöglich sichergestellt werden.

Die Trennung von formgebendem Stempel und Umformteil erfolgt bevorzugt sobald sich das umgeformte Bauteil nicht mehr selbsttätig zurückverformen kann. Dies erfolgt idealerweise im Temperaturbereich 80 - 90 °C. Bevorzugt erfolgt danach eine Temperphase bei 70 bis 90°C, bevorzugt 75 bis 85°C, besonders bevorzugt 80°C. Diese ermöglicht, dass das Bauteil spannungsfrei getempert wird.

Bei der Abkühlung nach Umformende ist besonders bevorzugt darauf zu achten, dass der Rohling bis zum Ende der Abkühlung eine möglichst gleiche Temperatur innen und außen hat, um thermischen Spannungen zu verhindern. Die Temperatur innen (in der Mittelebene) und außen (an der äußeren Oberfläche) sollte um bevorzugt maximal 20 bis 35 °C, besonders bevorzugt um maximal 5 bis 20 °C variieren. Selbstverständlich sollte auch darauf geachtet werden, dass keine Inhomogenitäten der Temperaturen in der Oberfläche oder im Inneren des Rohlinges oder des umgeformten Teils vorkommen. Nur durch die schonende Umformung in dem beschriebenen Prozess kann sichergestellt werden, dass die Materialeigenschaften des eingesetzten Materials nicht beeinträchtigt werden.

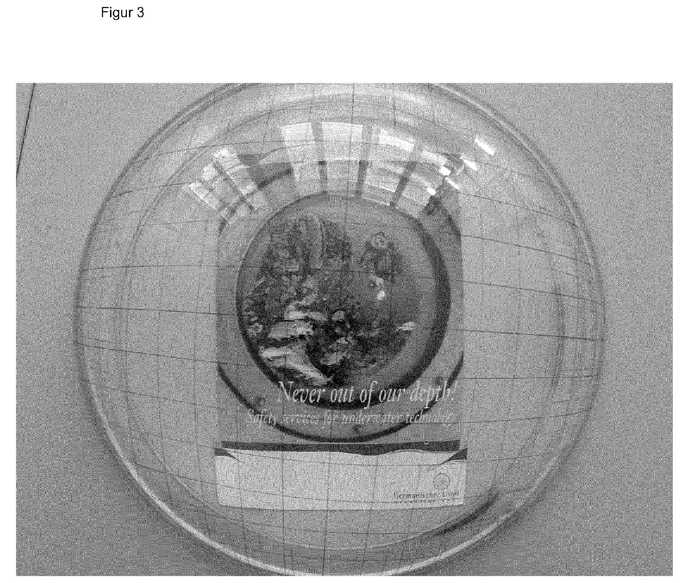

Wie in Figur 3 zu erkennen ist, weist das erfindungsgemäße Bauteil nach der Abkühlung - ohne weitere Oberflächenveredelungsschritte - bereits eine sehr gute optische Qualität auf. In Figur 3 wurde ein Rohling mit aufgezeichneter Gitterstruktur verwendet um die Gleichmäßigkeit der Umformung prüfen zu können. Wie man erkennen kann ist diese sehr gleichmäßig.

Es ist im erfindungsgemäßen Verfahren natürlich möglich in einem oder mehreren dem Schritt d) nachgeschalteten Schritt(en) das umgeformte Bauteil innen und/oder außen einer mechanischen Nachbearbeitung, insbesondere Fräsen und/oder Schleifen und/oder Polieren, zu unterziehen, so dass Bauteile mit exzellenten optischen Eigenschaften erhalten werden können.

Die im erfindungsgemäßen Verfahren bevorzugt verwendbare Apparatur zeichnet sich dadurch aus, dass der Rohling von unten gegen einen fest montierten Stempel gefahren oder dass ein Stempel von oben in einen Rohling gedrückt wird und

dass das Spaltmaß zwischen Stempel an dessen breitester Ausdehnung und Ziehmatrize im Bereich vom 0,7 bis 1,5, bevorzugt 0,8 -1,5 ; besonderes bevorzugt 0,9 - 1,2; ganz besonderes bevorzugt 1,0 - 1,1 fachen der eingesetzten Materialdicke des plattenförmigen Rohlings liegt.

In einer ersten bevorzugten Ausführungsform des erfindungsgemäßen Verfahrens, in der bevorzugt Bauteile mit kleinen Öffnungswinkeln, besonders bevorzugt 90 - 120°, hergestellt werden, wird der Stempel nicht mit seiner breitesten Stelle in die Ziehmatrize eingefahren. Daher sind hier geringere Spaltmaßdicken, bis hin zu 1,0 ausreichend. Vorzugsweise liegt hier das Spaltmaß beim 0,7 bis 1,5, besonders bevorzugt bei 0,9 bis 1,2 und ganz besonders bevorzugt bei 1 bis 1,1 fachen der eingesetzten Materialdicke des plattenförmigen Rohlings.

In einer zweiten bevorzugten Ausführungsform, in der bevorzugt Bauteile mit großem Öffnungswinkel, besonders bevorzugt größer 120°, hergestellt werden, wird der Stempel tiefer in die Ziehmatrize eingefahren, in der Regel so tief, dass er an seiner breitesten Stelle in die Ziehmatrize eintaucht, so dass das Spaltmaß hier in der Regel größer ist als in der ersten bevorzugten Ausführungsform. Vorzugsweise liegt hier das Spaltmaß bei dieser Ausführungsform bei größer dem 1 bis 1,5, besonders bevorzugt bei dem 1,01 bis 1,4, ganz besonders bevorzugt bei dem 1,02 bis 1,3, speziell bevorzugt bei dem 1,04 bis 1,2, ganz speziell bevorzugt bei dem 1,05 bis 1,2 und insbesondere bevorzugt bei dem 1,05 bis 1,1 fachen der eingesetzten Materialdicke des plattenförmigen Rohlings.

Neben den oben für die Verfahrensschritte a) bis d) diskutierten Verfahrensbedingungen und der Formgebung des Rohlings haben die Erfinder herausgefunden, dass ein definiertes Spaltmaß zusätzlich zu einer Verbesserung der Bauteileigenschaften beitragen kann.

Ein Spaltmaß in den o. g. Bereichen sorgt für einen homogenen Formkontakt und kann verhindern, dass ein zu großer Wulst am Durchtritt der Ziehmatrize entsteht. Wird dieser Wulst zu groß, kann es passieren, dass zu viel Pressdruck aufgewendet werden muss, was zu Reckungen (ähnlich einer Fixierung des Rohlings) und Stauchungen führt. Dies wiederum beeinträchtigt die mechanischen Eigenschaften der erfindungsgemäßen Bauteile. Die erfindungsgemäße Apparatur bzw. das erfindungsgemäße Verfahren zeichnen sich daher besonders bevorzugt dadurch aus, dass das Spaltmaß in den o. g. Bereichen liegt.

Als Ziehmatrize kann in der erfindungsgemäßen Apparatur eine offene oder eine geschlossene Gegenform verwendet werden. Die Ziehform kann teilbar ausgestaltet sein um das herauslösen komplizierter Bauteile zu erleichtern. Eine geteilte Ziehform, bei der einzelne Abschnitte zueinander verfahren werden können, bietet darüber hinaus die Möglichkeit, während der Umformung das Spaltmaß anzupassen, um eine optimale Formgebung zu gewährleisten.

Die Apparatur kann zudem eine Unterdruckeinrichtung, bevorzugt einen Vakuumsack oder Unterdruckkammer, unterhalb der Ziehmatrize umfassen, um den nötigen Preßdruck des Stempels noch weiter zu reduzieren. Der Unterdruck muss hierbei so einstellbar sein, dass die vorstehend genannten Umformgeschwindigkeiten eingehalten werden können. Gemäß der bis zum Ende der Umformung ansteigenden Umformkraft, muss somit der Druck während der Umformung erhöht werden können. Bevorzugte Unterdruckanstiegsraten sind hierfür bevorzugt jeweils 0,01 bis 0,9 bar/h, besonders bevorzugt 0,05 bis 0,5 bar/h und ganz besonders bevorzugt 0,1 bis 0,4 bar/h.

In einer besonders bevorzugten Ausgestaltungsform der vorliegenden Erfindung sind die formgebenden Teile, insbesondere Stempel und Ziehmatrize, beweglich ausgestaltet, so dass deren Position während der Umformung verändert werden kann. Dadurch können spezielle Geometrien der umgeformten Bauteile erzeugt werden. Die Bewegung kann mittels manueller Betätigung oder automatisiert, z. B. mittels Stellmotoren etc. erfolgen. Entsprechende technische Lösungen sind allseits bekannt und können von einem Fachmann einfach umgesetzt werden.

Wie bereits erwähnt ist die Steuerung der Prozeßtemperatur eine wichtige Eigenschaft der erfindungsgemäßen Apparatur. Dazu kann diese bevorzugt in einer temperierbaren Einhausung, besonders bevorzugt einem Wärmeschrank, angeordnet und/oder mit temperierbaren Werkzeugen, ausgestattet sein. Bei den Werkzeugen können gleiche aber auch unterschiedliche Temperierungen der Formen und Kontaktflächen eingestellt werden. Neben temperierbaren Formgebungswerkzeugen kann die erfindungsgemäße Apparatur auch rein zur Aufheizung oder Abkühlung dienende Einrichtungen umfassen.

Allgemein gilt, dass die erfindungsgemäße Apparatur nicht nur Heizeinrichtungen, sondern auch Kühleinrichtungen umfassen kann, um sowohl den Aufheiz- als auch den Abkühlprozess optimal steuern zu können.

Die vorliegende Erfindung umfasst auch nicht planare, biaxial umgeformte Bauteile aus einem Polymethylmethacrylat-haltigen Polymermaterial, welche dadurch gekennzeichnet sind, dass sie
- eine Dicke von 30 bis 300 mm, bevorzugt 30 bis 250 mm, besonders bevorzugt 50 bis 200 mm aufweisen,
- die Wanddicke an der dicksten Stelle des Bauteils um maximal 50% dicker ist als an der dünnsten Stelle
   und
- dass bei Erwärmung des Bauteils auf Temperaturen von 120 bis 170 °C dieses teilweise bis vollständig in die Form des Rohlings zurückrelaxiert.

Die erfindungsgemäßen Bauteile unterscheiden sich wesentlich von den mittels Druckgußpolymerisation hergestellten Bauteilen des Standes der Technik, welche bei entsprechender Erwärmung nicht zurückrelaxieren.

Die Eigenschaft der thermischen Relaxation, welche durch das erfindungsgemäße Verfahren bedingt ist, kann unter anderem bei der Wiederverwertung der erfindungsgemäßen Bauteile vorteilhaft ausgenutzt werden. Es sind jedoch auch spezielle Anwendungen denkbar, bei denen die Umformung zur ursprünglichen Form des Rohlings bei bestimmten Temperaturen, z. B. aus sicherheitstechnischen Gründen wünschenswert ist.

Die erfindungsgemäßen Bauteile können viele verschiedenartige, symmetrische aber auch asymmetrische Formen, insbesondere Hohlformen aufweisen. Bevorzugt handelt es sich um ein Kugelsegment, insbesondere eine Halbkugel, oder ein grades oder gebogenes Röhrensegment oder ein sonstiger Hohlformen ähnliches Bauteil wie Schüssel, Tassen Badewannen etc..

Die Geometrien der nachgefragten Verglasungen im Markt, zeichnen sich durch ein kleines Verhältnis von Umformradius zu Materialdicke aus. Dies bedeutet in der Realität extreme Stauchungs- und Reckungsbeanspruchung. Im Falle von Kugelsegmenten liegt der Öffnungswinkel bevorzugt im Bereich von 90 bis 180° und besonders bevorzugt im Bereich von 120 bis 180° und/oder das Verhältnis von Innenradius zu Wanddicke liegt im Bereich von 2 bis 50 besonders bevorzugt im Bereich von 3 bis 20. Mit dem erfindungsgemäßen Verfahren sind entsprechend anspruchsvolle Geometrien herstellbar. So sind z. B. auch Bauteile herstellbar, deren Öffnungswinkel 180° betragen und danach das umgeformte Teil noch eine zylindrische Fortsetzung erfolgt.

Die erfindungsgemäßen Bauteile sind weitgehend bzw. vollständig spannungsfrei - was über die Materialprüfung nachgewiesen werden kann - und alle Materialkennwerte haben mehr oder weniger keine negative Veränderung gegenüber dem Ausgangsmaterial erfahren.

Im erfindungsgemäßen Verfahren wird ein Rohling in einer Weise umgeformt, bei der eine möglichst geringe Ausreckung der Materialdicke erfolgt. Das ist einer der entscheidenden Unterschied zu den bisher gebräuchlichen Verfahren. So können neue Anwendungsfelder erschlossen werden. Eine bevorzugte Anwendung sind U-Boot-Scheiben (Kugelsegment- bzw. Halbkugelfenster) aber auch andere Bauteile wie gekrümmte Wasserrutschenelemente oder Verglasung in extremen Umgebungen, z. B. von Unterwasserhotels oder Bauteile für Besucheraquarien, sowie Kunst- und Bauobjekte.

Die nachfolgenden Beispiele dienen der Veranschaulichung und dem vertieften Verständnis der vorliegenden Erfindung, schränken diese aber in keiner Weise ein.

### Beispiel 1:

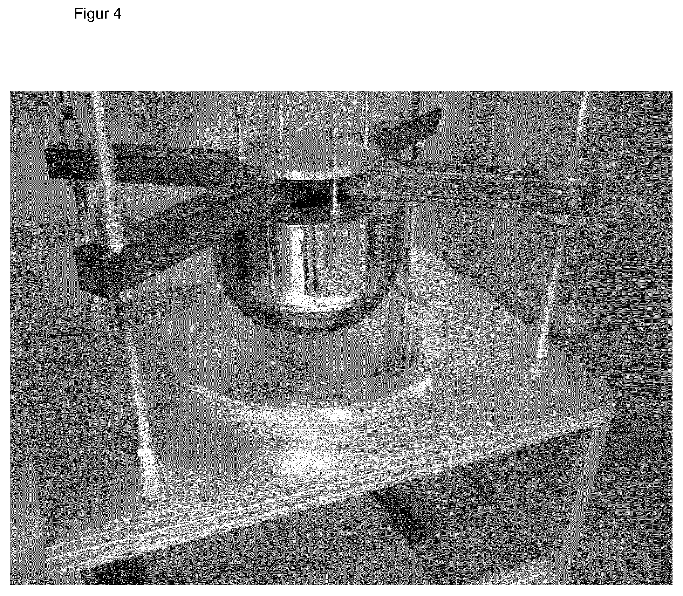

In einer Laborapparatur gemäß Figur 4 wurde ein Bauteil in Halbkugelform aus einem Rohling mit einer Materialdicke von 40 mm hergestellt. Der Innenradius des Bauteils beträgt 180 mm, so dass das Umformverhältnis Innenradius/Materialdicke 4,5 beträgt. Die Apparatur gemäß Figur 4 wurde in einem Temperschrank aufgebaut und die Temperatur des Rohlings vor Umformung sowie die Prozeßtemperatur auf 150 °C eingestellt. Das Spaltmaß betrug 43 mm.

Eine Abbildung des - direkt nach der Umformung erhaltenen und nicht weiter mechanisch bearbeiteten - Bauteils ist in Figur 3 wiedergegeben. Man erkennt die bereits hervorragende optische Qualität.

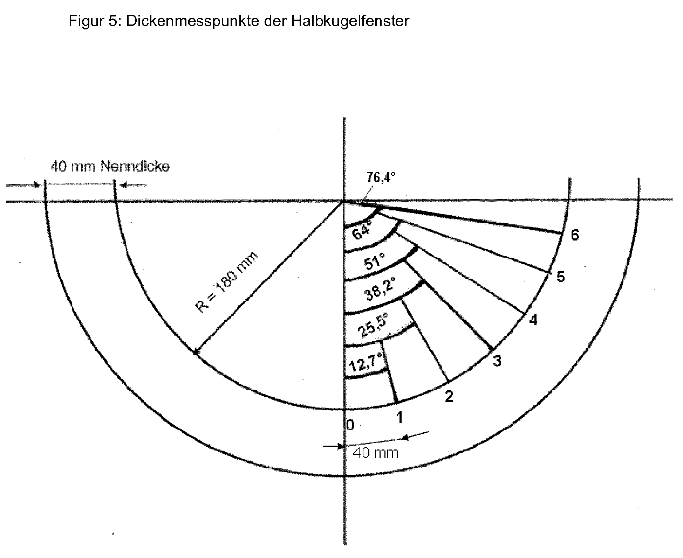

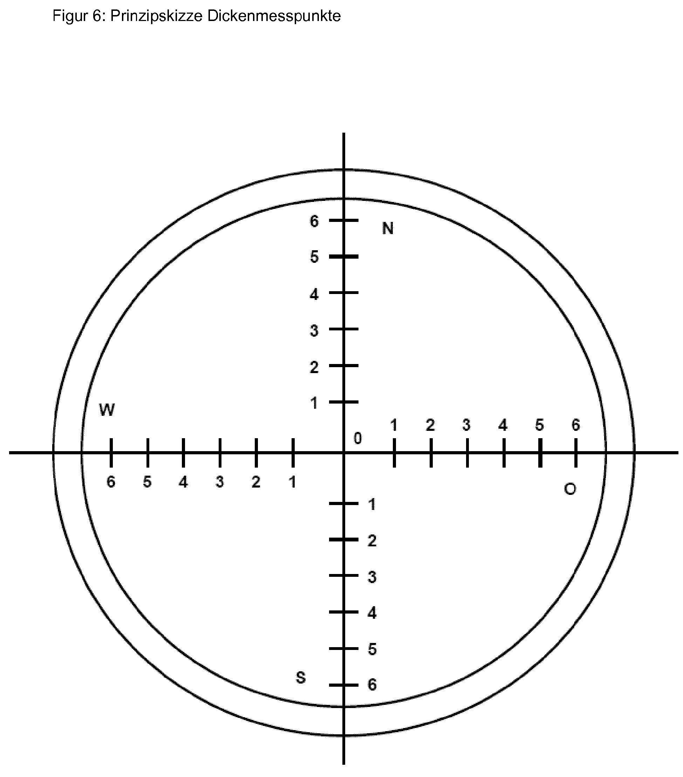

Zur Dickenkontrolle wurden mehrere Meßpunkte gemäß Figuren 5 und 6 festgelegt und mittels eines Ultraschall Dickenmessgerätes an den jeweiligen Meßpunkten die Dicke bestimmt. Die Ergebnisse sind in nachfolgender Tabelle 1 angegeben.

**Tabelle 1:**

| | 0 | 1 | 2 | 3 | 4 | 5 | 6 |
|---|---|---|---|---|---|---|---|
| S | 35,8 | 36,1 | 36,2 | 36,9 | 38,4 | 40,9 | 43,6 |
| O | | 36,3 | 36,7 | 37,7 | 39,5 | 40,7 | 44,2 |
| N | | 36,2 | 36,6 | 37,3 | 38,7 | 41,3 | 44,1 |
| W | | 36,1 | 36,4 | 37 | 38,5 | 40,5 | 43 |

Man erkennt, dass die Abweichungen von der Ausgangsdicke des Rohlings im Bereich von +-10 % liegen. Im Vergleich zu Umformungsverfahren des Standes der Technik, bei denen die ursprüngliche Materialstärke um ca. 70 % reduziert wird, stellt dies eine signifikante Verbesserung dar und belegt, die geringe Reckung/Stauchung bereits in diesem Laborexperiment. Ferner wird deutlich, dass nur eine geringe Nachbearbeitung notwendig ist.

Da Geometrien mit großem Verhältnis Innenradius / Materialdicke weniger stark umgeformt werden müssen als solche mit einem kleinen Verhältnis, belegt dieser Praxisnachweis die Anwendbarkeit des Verfahrens auch bei größeren Materialstärken.

### Beispiel 2:

In einer vergrößerten Apparatur ähnlich Figur 4 wurde ein Umformungsrohling mit einer Dicke von 170 mm zu einem halbkugelförmigen U-Bootfenster umgeformt. Das fertige U-Bootfenster hat eine Materialdicke von 140 mm und einen Innenradius von 595 mm.

Der umgeformte Rohling wies - vor der mechanischen Nachbearbeitung - eine Dickenschwankung - gemessen wie in Beispiel 1 - von -25 bis + 15 mm (entspricht + 9 bis -15%) auf.

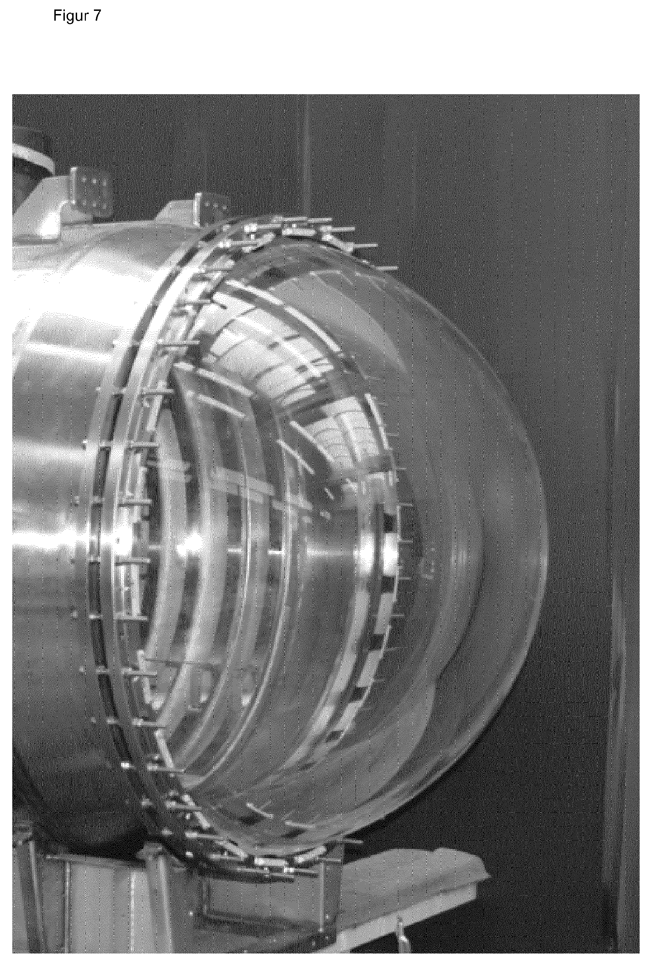

Aus dem Rohling wurde durch mechanische Nachbearbeitung (Fräsen/Polieren/Schleifen) das finale Fenster erhalten. Das Fenster erfüllt alle Zulassungsbedingungen für Druckbelastungen bis zu 100 bar, d.h.Tauchtiefen bis 1000 m. Alle Anforderungen an die optischen Eigenschaften werden ebenfalls erfüllt (siehe Figur 7).

Dieses Beispiel belegt, dass es mit dem erfindungsgemäßen Verfahren möglich ist aus - im Vergleich zur Zieldicke des umgeformten Bauteils - nur geringfügig dickeren Rohlingen umgeformte Bauteile mit hervorragenden optischen und mechanischen Eigenschaften herzustellen. Dadurch geht bei der mechanischen Nachbearbeitung nur wenig Material verloren, insbesondere im Vergleich zu den bislang standardmäßig verwendeten Verfahren der Druckpolymerisation mit mechanischer Nachbearbeitung. Die Ergebnisse dieses Versuchs lassen zudem den Schluss zu, dass das gleiche Zielbauteil auch mit Rohlingen mit einer Dicke zwischen 140 und 170 mm nach dem erfindungsgemäßen Verfahren erhalten werden könnten. Ein Rohling mit einer Dicke von 170 mm wurde nur gewählt, da ein solcher Rohling kommerziell verfügbar war.

### Beispiel 3:

In einer Apparatur gemäß Figur 4 wurde ein Umformungsrohling aus Plexiglas^{®} GS mit einer Dicke von 60 mm zusammen mit einer untergelegten Verlustscheibe mit einer Dicke von 10 mm zu einem halbkugelförmigen U-Bootfenster umgeformt. Das fertige U-Bootfenster hat eine Materialdicke von 45 mm und einen Innenradius von 358 mm.

Das umgeformte Teil aus Rohling und Verlustscheibe wies - vor der mechanischen Nachbearbeitung - eine Dickenschwankung - gemessen wie in Beispiel 1 - von -7 bis + 12 mm (entspricht + 17 bis - 10 %) auf. Die Fläche A in der Mittelebene des Rohlings betrug 0,76m² und die Fläche Av in der Mittelebene des umgeformten Rohlings betrug 0,85 m², so dass eine Vergrößerung von lediglich 12% durch die Umformung zu verzeichnen war.

Aus dem Teil wurde die Verlustscheibe komplett abgefräst und dann aus dem umgeformten Rohling durch mechanische Nachbearbeitung (Fräsen/Polieren/Schleifen) das finale Fenster erhalten.

In diesem Beispiel wurde ein Verformungsraster in die Verlustscheibe eingefräst, welches eine spätere Kontrolle der Umformung ermöglichte. Ohne Verlustscheibe ist dies nicht möglich, da das Muster sonst in den Rohling eingefräst werden müsste. Die Verlustscheibe führte im vorliegenden Beispiel zu einer Verbesserung der Formtreue für die Innenkontur. Die abgefräste Verlustscheibe wurde recycelt.

### Beispiel 4:

In einer vergrößerten Apparatur gemäß Figur 4 wurde ein Umformungsrohling mit einer Dicke von 60 mm zu einem halbkugelförmigen Bauteil mit zylindrischem Fortsatz umgeformt. Mit anderen Worten, der Öffnungswinkel beträgt 180°, erweitert um den zylindrischen Fortsatz, was einer extremen Umformung entspricht.

Der umgeformte Rohling wies - vor der mechanischen Nachbearbeitung - eine Dickenschwankung - gemessen wie in Beispiel 1 - von - 8 bis + 5 mm (entspricht + 8 bis - 9 %) auf. Die Fläche A in der Mittelebene des Rohlings betrug 0,46 m² und die Fläche Av in der Mittelebene des umgeformten Rohlings betrug 0,424 m², so dass eine Verringerung von lediglich 7,8% durch die Umformung zu verzeichnen war, was wiederum die materialsparende Durchführbarkeit und somit hohe Effizienz des erfindungsgemäßen Verfahrens belegt.

## Patentansprüche

1. Verfahren zur Herstellung biaxial gekrümmter Bauteile aus Polymethylmethacrylathaltigen Rohlingen,
welches die nachfolgenden Schritte umfasst:
a) Erzeugung eines Rohlings mit einer Dicke von 30 bis 400 mm aus einem Polymethylmethacrylat-haltigen Polymermaterial, wobei die Fläche A in der Mittelebene des Rohlings der Fläche Av in der Mittelebene des umgeformten Bauteils mit einer Varianz von ± 40% entspricht,
b) Einführung des Rohlings in die Umformungsapparatur derart, dass er auch während der Umformung an seinen Rändern frei beweglich ist, bevorzugt wird der Rohling auf eine Ziehmatrize aufgelegt,
c) Erwärmen des Rohlings auf eine Temperatur von 120 bis 170°C
d) Umformen des Rohlings mittels einer Stempelumformung.

2. Verfahren nach Anspruch 1
**dadurch gekennzeichnet,**
**dass** das Spaltmaß zwischen Stempel an dessen breitester Ausdehnung und Ziehmatrize im Bereich von dem bevorzugt 0,7 bis 1,5, besonders bevorzugt 0,8 -1,5 ; ganz besonderes bevorzugt 0,9 - 1,2 und speziell bevorzugt 1,0 - 1,1 fachen der eingesetzten Materialdicke des plattenförmigen Rohlings liegt.

3. Verfahren nach Anspruch 1 oder 2
**dadurch gekennzeichnet,**
**dass**
der Rohling von unten gegen einen fest montierten Stempel gefahren oder dass ein Stempel von oben in einen Rohling gedrückt wird und/oder
als Ziehmatrize eine offene oder eine geschlossene Gegenform verwendet wird
und/oder
Umformhilfsmittel verwendet werden, insbesondere, dass ein Gleitmittel auf die Ziehmatrize und/oder den Stempel aufgetragen wird
und/oder
eine Apparatur mit einer Unterdruckeinrichtung, bevorzugt einem Vakuumsack unterhalb der Ziehmatrize, verwendet wird
und/oder
eine Apparatur verwendet wird in der die formgebenden Teile, insbesondere Stempel und/oder Ziehmatrize, beweglich ausgestaltet sind, so dass deren Position während der Umformung verändert werden kann
und/oder
eine Apparatur verwendet wird, mit deren Hilfe der Umformrohling im Umformprozess z.B. gegen den Stempel oder in den Ziehspalt gedrückt werden kann
und/oder
eine Apparatur verwendet wird, bei der die einzelnen Abschnitte der geteilten Ziehform zueinander bewegt werden können, um den Ziehspalt für eine optimale Formgebung anzupassen.

4. Verfahren nach einem der Ansprüche 1 bis 3,
**dadurch gekennzeichnet,**
**dass**
die Temperatur des Rohlings in der Mittelebene während der gesamten Umformung mit einer Varianz von bis zu ± 5 % konstant gehalten wird
und/oder
ein, bevorzugt in einem Wärmeschrank, vorgewärmter Rohling in die Apparatur eingeführt wird
und/oder
die Umformung komplett in einer Apparatur mit temperierbarer Einhausung und/oder mit temperierbaren Werkzeugen, wobei gleiche aber auch unterschiedliche Temperierungen der Formen und Kontaktflächen möglich sind, erfolgt
und/oder
das Bauteil nach der Umformung in der Form verbleibt und mit dieser abgekühlt wird.

5. Verfahren nach einem der Ansprüche 1 bis 4,
**dadurch gekennzeichnet,**
**dass**
es ohne Haltephasen, bevorzugt mit einer Umformgeschwindigkeit von 0,2 bis 2 mm/ sec, besonders bevorzugt 0,5 bis 1,5 mm/sec und ganz besonders bevorzugt 0,5 bis 1 mm/sec durchgeführt wird,
oder
es mit einer oder mehreren Haltephasen, bevorzugt mit einer Umformgeschwindigkeit von 0,2 bis 20 mm/sec, besonders bevorzugt 0,5 bis 10 und ganz besonders bevorzugt 0,5 bis 5 mm/sec durchgeführt wird.

6. Verfahren nach einem der Ansprüche 1 bis 5,
**dadurch gekennzeichnet,**
**dass** das umgeformte Bauteil innen und/oder außen einer mechanischen Nachbearbeitung, insbesondere Fräsen und/oder Schleifen und/oder Polieren, unterzogen wird.

7. Verfahren nach einem der Ansprüche 1 bis 6,
**dadurch gekennzeichnet,**
**dass**
ein Rohling verwendet wird, der aus einem einschichtigen Block besteht oder dass ein Rohling verwendet wird, welcher aus mehreren miteinander verbundenen Schichten besteht
und/oder
ein Rohling mit einer Dicke an seiner dünnsten Stelle im Verhältnis zur Dicke der umgeformten Bauteile an dessen dünnster Stelle von 1,0 bis 2,0 besonders bevorzugt 1,05 bis 1,5 und ganz besonders bevorzugt 1,1 bis 1,2 hergestellt wird und/oder
**dass** der Rohling eine Dicke 30 bis 300 mm, bevorzugt 30 bis 250 mm, besonders bevorzugt 50 bis 200 mm, ganz besonders bevorzugt 50 bis 180 mm und speziell bevorzugt 60 bis 160 mm aufweist
und/oder
auf den Rohling und/oder unter den Rohling eine oder mehrere

8. Nicht planares, biaxial umgeformtes Bauteil aus einem Polymethylmethacrylathaltigen Polymermaterial,
welches eine Dicke von 30 bis 300 mm aufweist, wobei die Wanddicke an der dicksten Stelle des Bauteils um maximal 50% dicker ist als an der dünnsten Stelle und wobei bei Erwärmung des Bauteils auf Temperaturen von 120 bis 170 °C dieses teilweise bis vollständig in die Form des Rohlings zurückrelaxiert.

9. Bauteil nach Anspruch 8,
**dadurch gekennzeichnet,**
**dass** es sich um ein Kugelsegment, insbesondere eine Halbkugel, oder ein gebogenes Röhrensegment handelt.

10. Bauteil nach Anspruch 9,
**dadurch gekennzeichnet,**
**dass** es sich um ein Kugelsegment, mit einem Öffnungswinkel im Bereich von 90 bis 180° und/oder einem Verhältnis von Innenradius zu Wanddicke im Bereich von 2 bis 50, handelt.

11. Bauteil nach einem der Ansprüche 8 bis 10,
**dadurch gekennzeichnet,**
**dass** es nach einem Prozess nach einem der Ansprüche 1 bis 7 hergestellt wurde.

12. Verwendung eines Bauteils nach einem der Ansprüche 8 bis 10 als Verglasung, insbesondere von Forschungs- und touristischen Tauchbooten und Unterwasserhotels, als Rutschenböden von Wasserrutschen, als Bauteile für Besucheraquarien, sowie Kunst- und Bauobjekte.

## Claims

1. Process for producing biaxially curved components from preforms which comprise polymethyl methacrylate,
comprising the following steps:
a) producing a preform of thickness from 30 to 400 mm from a polymethyl-methacrylate-containing polymer material, where the area A in the central plane of the preform is equal to the area Av in the central plane of the component obtained from the forming process, with a variance of ± 40%,
b) introducing the preform into the apparatus for the forming process in such a way that it is freely moveable at its edges even during the forming process, and it is preferable here that the preform is placed on a female mould,
c) heating the preform to a temperature of from 120 to 170°C,
d) using a male mould to carry out a forming process on the preform.

2. Process according to Claim 1,
**characterized in that**
the size of the gap between male mould at its widest dimension and female mould is in a range which is preferably from 0.7 to 1.5, particularly preferably from 0.8 to 1.5, very particularly preferably from 0.9 to 1.2, and specifically preferably from 1.0 to 1.1, times the thickness of the preform sheet used.

3. Process according to Claim 1 or 2,
**characterized in that**
the preform is moved from below against a fixedly mounted male mould, or **in that** a male mould is forced from above into a preform and/or
the female mould used comprises an open or closed countermould
and/or
aids to the forming process are used, in particular **in that** a lubricant is applied to the female mould and/or to the male mould
and/or
an apparatus with reduced-pressure equipment, preferably a vacuum bag below the female mould, is used
and/or
an apparatus is used in which the shaping parts, in particular male mould and/or female mould, have been designed moveably, in such a way that their position can be altered during the forming process,
and/or
an apparatus is used with the aid of which the preform can be forced during the forming process by way of example against the male mould or into the gap formed by the female mould
and/or
an apparatus is used in which the individual sections of the divided female mould can be moved with respect to one another, in order that the gap formed by the female mould is adapted appropriately for ideal shaping.

4. Process according to any of Claims 1 to 3, **characterized in that**
the temperature of the preform in the central plane is held constant during the entire forming process with a variance of up to ± 5%
and/or
a preform preheated, preferably in an oven, is introduced into the apparatus
and/or
the entire forming process takes place in an apparatus with temperature-controllable housing and/or with temperature-controllable tooling, where possible temperatures to which the moulds and contact surfaces are controlled are either identical or different
and/or
after the forming process, the component remains in the mould and is cooled with the same.

5. Process according to any of Claims 1 to 4,
**characterized in that**
it is carried out without holding phases, preferably with a speed of from 0.2 to 2 mm/sec for the forming process, particularly preferably from 0.5 to1.5 mm/sec and very particularly preferably from 0.5 to 1 mm/sec,
or
it is carried out with one or more holding phases, preferably with a speed of from 0.2 to 20 mm/sec for the forming process, particularly preferably from 0.5 to 10 mm/sec and very particularly preferably from 0.5 to 5 mm/sec.

6. Process according to any of Claims 1 to 5,
**characterized in that**
the component obtained from the forming process is subjected to an internal and/or external mechanical finishing process, in particular milling and/or grinding and/or polishing.

7. Process according to any of Claims 1 to 6,
**characterized in that**
a preform is used which is composed of a single-layer slab, or **in that** a preform is used which is composed of a plurality of layers bonded to one another
and/or
a preform is produced with a thickness at its thinnest point, as a ratio to the thickness of the components obtained from the forming process at their thinnest point, of from 1.0 to 2.0, particularly preferably from 1.05 to 1.5 and very particularly preferably from 1.1 to 1.2
and/or
**in that** the thickness of the preform is from 30 to 300 mm, preferably from 30 to 250 mm, particularly preferably from 50 to 200 mm, very particularly preferably from 50 to 180 mm and specifically preferably from 60 to 160 mm
and/or
one or more sacrificial sheets is/are placed on the preform and/or under the preform and subjected together with the preform to the forming process.

8. Non-planar, biaxially formed component made of a polymer material which comprises polymethyl methacrylate,
having a thickness of from 30 to 300 mm, wherein the wall thickness at the thickest point of the component is at most 50% greater than at the thinnest point, and wherein when the component is heated to temperatures of from 120 to 170°C it reverts by relaxation partially or completely to the shape of the preform.

9. Component according to Claim 8,
**characterized in that**
it involves a spherical segment, in particular a hemisphere, or a curved tube segment.

10. Component according to Claim 9,
**characterized in that**
it involves a spherical segment with an aperture angle in the range from 90 to 180° and/or with a ratio of internal radius to wall thickness in the range from 2 to 50.

11. Component according to any of Claims 8 to 10,
**characterized in that**
it has been produced by a process according to any of Claims 1 to 7.

12. Use of a component according to any of Claims 8 to 10 as glazing, in particular for submersible boats for research purposes or for touristic purposes and underwater hotels, in the form of slide bases for water slides, or in the form of components for public aquaria, or artwork projects or construction projects.

## Revendications

1. Procédé pour la préparation de pièces coudées de manière biaxiale à partir d'ébauches contenant du poly(méthacrylate de méthyle), qui comprend les étapes suivantes :
a) production d'une ébauche présentant une épaisseur de 30 à 400 mm à partir d'un matériau polymère contenant du poly(méthacrylate de méthyle), la surface A dans le plan central de l'ébauche correspondant à la surface Av dans le plan central de la pièce transformée, à une variance de ± 40%,
b) introduction de l'ébauche dans l'appareil de transformation de manière telle qu'elle est librement mobile, également pendant la transformation, au niveau de ses bords, de préférence, l'ébauche est placée sur une matrice d'emboutissage,
c) chauffage de l'ébauche à une température de 120 à 170°C
d) transformation de l'ébauche au moyen d'une transformation par poinçon.

2. Procédé selon la revendication 1, **caractérisé en ce que** la dimension de la fente entre le poinçon au niveau de sa dimension la plus large et la matrice d'emboutissage se situe dans la plage de préférence de 0,7 à 1,5, de manière particulièrement préférée de 0,8-1,5 ; de manière tout particulièrement préférée de 0,9-1,2 et en particulier de préférence de 1,0-1,1 fois l'épaisseur de matériau utilisée de l'ébauche en forme de plaque.

3. Procédé selon la revendication 1 ou 2, **caractérisé en ce que** l'ébauche est transportée par le bas contre un poinçon monté de manière fixe ou **en ce qu'**un poinçon est pressé par le dessus dans une ébauche et/ou on utilise, comme matrice d'emboutissage, un contre-moule ouvert ou fermé et/ou des adjuvants de transformation, en particulier **en ce qu'**un lubrifiant est appliqué sur la matrice d'emboutissage et/ou sur le poinçon et/ou on utilise un appareil présentant un dispositif à dépression, de préférence un sac à vide sous la matrice de poinçonnage et/ou on utilise un appareil dans lequel les pièces de façonnage, en particulier le poinçon et/ou la matrice d'emboutissage, sont disposées de manière mobile de manière telle que leur position peut être modifiée pendant la transformation et/ou on utilise un appareil à l'aide duquel l'ébauche de transformation peut être pressée, par exemple, contre le poinçon ou dans la fente d'emboutissage, pendant le procédé de transformation et/ou on utilise un appareil dans lequel les différentes parties du moule d'emboutissage divisé peuvent être déplacées les unes par rapport aux autres afin d'adapter la fente d'emboutissage à un façonnage optimal.

4. Procédé selon l'une quelconque des revendications 1 à 3, **caractérisé en ce que** la température de l'ébauche, dans le plan central, est maintenue constante pendant toute la transformation à une variance de jusqu'à ± 5% et/ou une ébauche préchauffée, de préférence dans une étuve, est introduite dans l'appareil et/ou la transformation a lieu complètement dans un appareil présentant un logement pouvant être régulé thermiquement et/ou avec des outils pouvant être régulés thermiquement, des régulations thermiques identiques ou également différentes des moules et des surfaces de contact étant possibles et/ou la pièce reste dans le moule après la transformation et est refroidie avec celui-ci.

5. Procédé selon l'une quelconque des revendications 1 à 4, **caractérisé en ce qu'**il est réalisé sans phases d'arrêt, de préférence à une vitesse de transformation de 0,2 à 2 mm/sec, de manière particulièrement préférée de 0,5 à 1,5 mm/sec et de manière tout particulièrement préférée de 0,5 à 1 mm/sec, ou il est réalisé avec une ou plusieurs phases d'arrêt, de préférence à une vitesse de transformation de 0,2 à 20 mm/sec, de manière particulièrement préférée de 0,5 à 10 mm/sec et de manière tout particulièrement préférée de 0,5 à 5 mm/sec.

6. Procédé selon l'une quelconque des revendications 1 à 5, **caractérisé en ce que** la pièce transformée est soumise, à l'intérieur et/ou à l'extérieur, à un postusinage mécanique, en particulier à un fraisage et/ou à un meulage et/ou à un polissage.

7. Procédé selon l'une quelconque des revendications 1 à 6, **caractérisé en ce qu'**on utilise une ébauche qui est constituée par un bloc monocouche ou **en ce qu'**on utilise une ébauche qui est constituée par plusieurs couches assemblées les unes aux autres et/ou on fabrique une ébauche présentant une épaisseur, au niveau de l'emplacement le plus mince, par rapport à l'épaisseur de la pièce transformée en son emplacement le plus mince de 1,0 à 2,0 fois, de manière particulièrement préférée de 1,05 à 1,5 fois et de manière tout particulièrement préférée de 1,1 à 1,2 fois et/ou **en ce que** l'ébauche présente une épaisseur de 30 à 300 mm, de préférence de 30 à 250 mm, de manière particulièrement préférée de 50 à 200 mm, de manière tout particulièrement préférée de 50 à 180 mm et en particulier de préférence de 60 à 160 mm et/ou une ou plusieurs plaques d'usure sont placées sur l'ébauche et/ou sous l'ébauche et transformées ensemble avec l'ébauche.

8. Pièce non planétaire, transformée de manière biaxiale en un matériau polymère contenant du poly(méthacrylate de méthyle), qui présente une épaisseur de 30 à 300 mm, l'épaisseur de paroi au niveau de l'emplacement le plus épais de la pièce étant plus épaisse d'au maximum 50% par rapport à l'emplacement le plus mince et, lors du chauffage de la pièce à des températures de 120 à 170°C, celle-ci se relâchant partiellement à complètement dans la forme de l'ébauche.

9. Pièce selon la revendication 8, **caractérisée en ce qu'**il s'agit d'un segment sphérique, en particulier d'une demi-sphère, ou d'un segment tubulaire coudé.

10. Pièce selon la revendication 9, **caractérisée en ce qu'**il s'agit d'un segment sphérique, présentant un angle d'ouverture dans la plage de 90 à 180° et/ou un rapport du rayon interne à l'épaisseur de paroi dans la plage de 2 à 50.

11. Pièce selon l'une quelconque des revendications 8 à 10, **caractérisée en ce qu'**elle a été préparée selon un procédé selon l'une quelconque des revendications 1 à 7.

12. Utilisation d'une pièce selon l'une quelconque des revendications 8 à 10 comme vitrage, en particulier de sous-marins de recherche et touristiques et d'hôtels sous-marins, comme fonds de glissements de toboggans aquatiques, comme pièces pour aquariums pour visiteurs ainsi que comme objets d'art et de construction.
